**Europäisches Patentamt**

**European Patent Office**

**Office européen des brevets**

(19)

(11) Veröffentlichungsnummer : **0 148 151**
**B1**

# (12) EUROPÄISCHE PATENTSCHRIFT

(45) Veröffentlichungstag der Patentschrift :
**09.11.88**

(51) Int. Cl.⁴ : **B 60 C 11/06**

(21) Anmeldenummer : **84890223.5**

(22) Anmeldetag : **21.11.84**

(54) **Fahrzeugluftreifen, insbesondere Radialreifen für Lastkraftwagen.**

(30) Priorität : **23.12.83 AT 4505/83**

(43) Veröffentlichungstag der Anmeldung :
**10.07.85 Patentblatt 85/28**

(45) Bekanntmachung des Hinweises auf die Patenterteilung : **09.11.88 Patentblatt 88/45**

(84) Benannte Vertragsstaaten :
**AT BE CH DE FR GB IT LI LU NL SE**

(56) Entgegenhaltungen :
**EP-A- 0 069 464**
**DE-A- 2 029 844**
**FR-A- 2 007 852**
**FR-A- 2 338 814**
**US-A- 2 779 378**

(73) Patentinhaber : **Semperit Reifen Aktiengesellschaft**
**Wienersdorferstrasse 20-24**
**A-2514 Traiskirchen (AT)**

(72) Erfinder : **Stelzer, Josef**
**Franz-Koci-Strasse 6/18**
**A-1100 Wien (AT)**

## Beschreibung

Die Erfindung betrifft ein Laufflächenprofil für einen Fahrzeugluftreifen, insbesondere Radialreifen für Lastkraftwagen, dessen Lauffläche in Umfangsrichtung verlaufende, durch zick-zack-förmige Nuten voneinander getrennte Rippen aufweist, wobei sich der Querschnitt der Nuten in Richtung zum Nutgrund zu verengt.

Radialreifen für Lastkraftwagen sind meistens mit einer Lauffläche versehen, die in Querrichtung durch zick-zack-förmige in Umfangsrichtung verlaufende Nuten in eine gewisse Anzahl von Rippen unterteilt ist. Es ist auch allgemein üblich, den Nutseitenwänden eine gewisse Neigung zu geben, sodaß sich die Nut in Richtung zum Nutgrund zu verengt. Diese Maßnahme hat den Zweck, im Fahrbetrieb das Abstoßen von Fremdkörpern, insbesondere Streinen, zu begünstigen. Hiebei wird beispielsweise in der US-PS 2,604.920 vorgeschlagen, die Nutseitenwände unter einem jeweils konstanten Winkel zur Senkrechten auf die Lauffläche anzuordnen. Bei einem weiteren bekannten Reifen (AT-PS 309.250) weisen die Seitenwände der Nuten anstatt einer konstanten Neigung eine sich in Umfangsrichtung schraubengangförmig veränderne Neigung auf. Diese Gestaltung des Profils wirkt sich günstig auf die Abnutzung nach längerer Laufzeit und auf gerader Strecke aus. Hingegen wird durch dieses Profil im Fahrbetrieb das Abstoßen von Fremdkörpern wenig begünstigt. Dazu wäre ein größerer Öffnungswinkel der Nut erforderlich, wodurch jedoch die Positivfahrfläche verkleinert wird. Des weiteren ist bei dieser bekannten Ausführung sowie auch bei weiteren bekannten Ausführungen durch die gleiche Zickzackführung und die ebenmäßige Ausführung der Nutseitenwände eine mäßige Traktion zu erwarten. Die EP-A-0069464 zeigt ein Laufflächenprofil gemäß dem Oberbegriff des Anspruchs 1.

Die Erfindung hat sich die Aufgabe gestellt, ein Laufflächenprofil der gattungsgemäßen Art derart zu gestalten, daß ein Einklemmen von Fremdkörpern in den Nuten der Lauffläche wirkungsvoll verhindert ist, daß dessen Lauffläche auch nach längerer Laufzeit einer gleichförmigen Abnutzung unterliegt, und daß besonders günstige Eigenschaften der Lauffläche in Bezug auf Traktion und Geradeauslaufstabilität vorliegen.

Gelöst wird die gestellte Aufgabe erfindungsgemäß durch die Kombination der Merkmale des Anspruchs 1.

Erfindungsgemäß wird daher insbesondere zwischen den Winkelbereichen der Nuten ein Nutquerschnitt vorgeschlagen, der ein Einklemmen von Fremdkörpern wirkungsvoll verhindert, wobei gleichzeitig die Positivfahrfläche der Lauffläche optimal groß gehalten werden kann. Durch die wechselnde Aufeinanderfolge von abgewinkelt und nahezu senkrecht ausgeführten Seitenwänden und durch das Vorsehen von aufgesetzten bzw. ausgenommenen Ecken in den Winkelbereichen wird ein gleichmäßiger Abrieb der Lauffläche erzielt. Insbesondere wird der Bildung sogenannter Freilaufrillen, wobei zuerst die Rippenkanten im Bereich der in die Nuten hineinragenden Winkel in Mitleidenschaft gezogen werden, vorgebeugt. Die ausgeprägte Strukturierung, insbesondere im Zusammenhang mit der Anordnung dieser Nuten im Laufflächenmittelbereich, wirkt sich besonders günstig auf die Traktion aus, insbesondere ist auch ein besserer Schneegriff des Profils gegenüber bekannten Reifen mit zickzackförmig verlaufenden Nuten gegeben.

Auch werden mit dem erfindungsgemäßen Profil günstige Ergebnisse hinsichtlich der Geradeauslaufstabilität und der Lenkexaktheit erzielt.

Als besonders günstig hat sich erwiesen, daß die zweifach abgewinkelte Seitenwand erfindungsgemäß im Querschnitt und im Bereich zwischen den Winkelbereichen betrachtet, von zwei im wesentlichen senkrecht zur Lauffläche verlaufenden, durch eine schrägverlaufende Flanke verbundenen Abschnitten gebildet ist. Insbesondere ist es dadurch möglich, die Flanke unter einem derart flachen Winkel anzuordnen, daß das Abstoßen von Steinen und anderen Fremdkörpern in jedem Fall gewährleistet ist.

Als besonders günstig hat sich hiebei ein Winkel $\alpha$ von 20° bis 60°, vorzugsweise 40°, zwischen einer Senkrechten auf die Lauffläche und der schräg verlaufenden Flanke erwiesen. Dieser Winkel wird je nach Nuttiefe, die vom Reifentyp abhängig ist, gewählt werden.

Eine besonders gleichförmige Abnutzung der Lauffläche über den ersten Abschnitt der abgestuften Seitenwand wird dadurch erreicht, daß von der Oberseite der Lauffläche aus betrachtet, der erste Abschnitt der aufgesetzten bzw. ausgenommenen Eckbereiche gemäß des ersten Abschnittes der Seitenwände, vorzugsweise im wesentlichen senkrecht zur Lauffläche verlaufend, ausgebildet ist.

Es soll auch gewährleistet sein, daß nahezu bis zum Nutgrund aufgesetzte bzw. ausgenommene Eckbereiche vorliegen, ohne daß Unregelmäßigkeiten in der Profilierung der Nutseitenwände auftreten, die zu einer ungleichmäßigen Abnutzung der Lauffläche und unterschiedlichem Traktionsverhalten während des Abriebes führen könnten. Es ist daher vorgesehen, daß jeder aufgesetzte bzw. ausgenommene Eckbereich an seinen ersten Abschnitt anschließend zwei sowohl in Richtung zum Nutgrund, als auch zur Umfangsrichtung der Lauffläche schräg verlaufende Bereiche aufweist, welche im wesentlichen dreieckförmig gestaltet sind und miteinander einen Winkel einschließend in Richtung zum Nutgrund spitz zusammenlaufen.

Für einen gleichmäßigen Abrieb über die gesamte Laufflächenbreite ist es weiters von Vorteil, wenn die innerhalb der äußeren Nuten angeordneten Nuten von im wesentlichen gleicher Breite ausgebildet sind, und daß die äußeren Nuten schmäler sind und vorzugsweise eine Breite aufweisen, die etwa ein Viertel der Breite der inneren Nuten beträgt.

Der im Schulterbereich zu erwartende Abrieb wird dadurch gering und gleichmäßig gehalten, daß die Schulterbänder, jeweils von der äußersten der mittleren Nuten aus gemessen, eine Breite aufweisen, die etwa ein Viertel der Breite der Lauffläche beträgt.

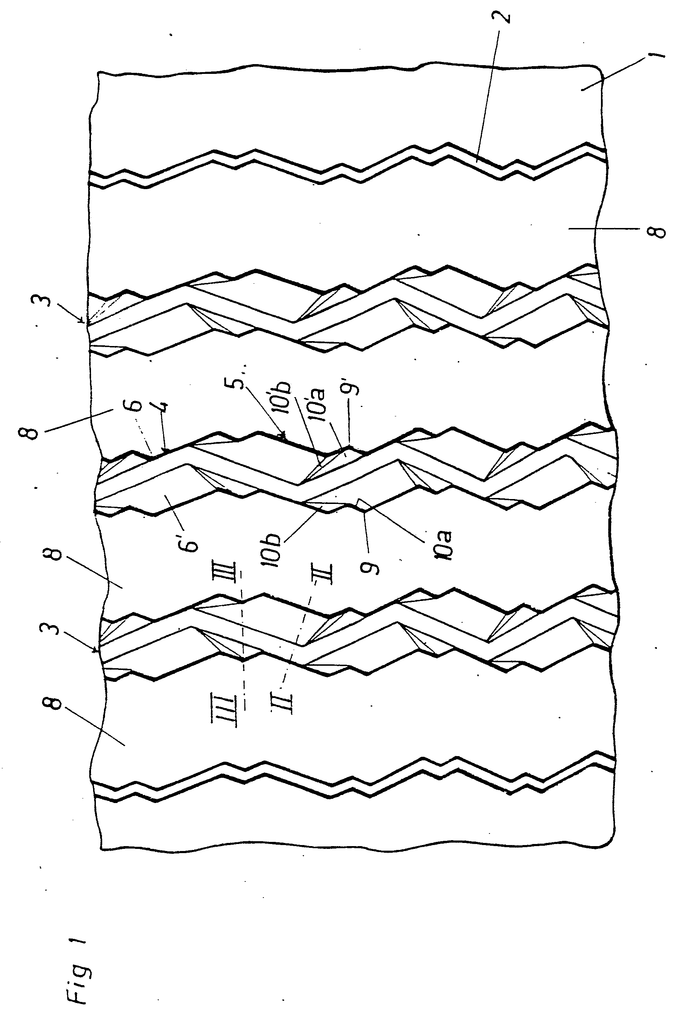

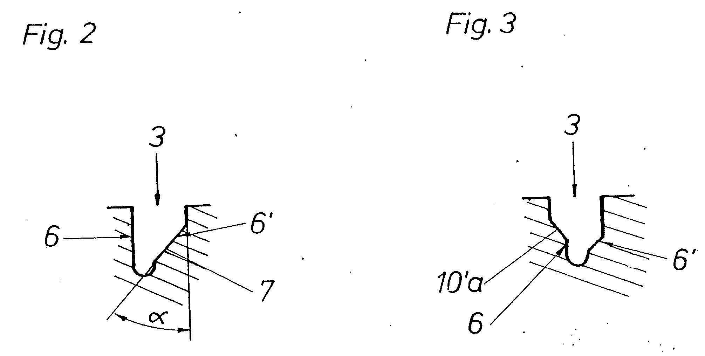

Weitere Merkmale, Vorteile und Einzelheiten werden nun anhand der Zeichnung, die ein Ausführungsbeispiel des erfindungsgemäßen Fahrzeugluftreifens darstellt, näher beschrieben. Hiebei zeigen Fig. 1 eine Draufsicht auf einen Teil der Lauffläche des erfindungsgemäßen Fahrzeugluftreifens, Fig. 2 eine Nut der Lauffläche im Schnitt entlang der Linie II-II der Fig. 1 und Fig. 3 die Nut im Schnitt entlang der Linie III-III der Fig. 1.

Die in den Zeichnungsfiguren dargestellte Lauffläche 1 ist für einen Radialluftreifen eines Lastkraftwagens bestimmt. Wie insbesondere aus Fig. 1 ersichtlich ist, ist die Lauffläche 1 in Querrichtung durch fünf Umfangsnuten mit Zickzackverlauf in Rippen 8 unterteilt. Hiebei sind die beiden äußeren Nuten 2 eng, die drei mittleren Nuten 3 breit ausgeführt. Die Nuten 2, 3 setzen sich aus abwechselnd in der einen und der anderen Richtung geneigten Abschnitten 4, 5 zusammen, deren Neigungswinkel zur Umfangsrichtung der Lauffläche 1 etwa 25° beträgt.

Die aufeinanderfolgenden Abschnitte 4, 5 jeder breiten Nut 3 weisen im Bereich zwischen den die Abschnitte 4, 5 trennenden Winkelbereichen Seitenwände 6, 6' auf, deren Verlauf und Anordnung insbesondere aus den Fig. 1 und 2 ersichtlich ist. Die eine Seitenwand 6 verläuft im wesentlichen senkrecht zur Lauffläche 1 bis nahezu zum Nutgrund, die dieser gegenüberliegende Seitenwand 6' ist zweifach abgewinkelt ausgebildet und weist einen äußeren, ebenfalls im wesentlichen senkrecht zur Lauffläche 1 verlaufenden Abschnitt auf, an den eine schräg verlaufende Flanke 7 anschließt, an die ein weiterer, im wesentlichen senkrecht zur Lauffläche 1 verlaufender, innerer Abschnitt in Richtung zum Nutgrund anschließt. Der Neigungswinkel α der Flanke 7 zur Senkrechten auf die Lauffläche 1 beträgt im vorliegenden Ausführungsbeispiel etwa 45°. Bei den einzelnen aufeinanderfolgenden Abschnitten 4, 5 ist nun der jeweils eine Rippe 8 begrenzende Bereich abwechselnd von einer nahezu senkrechten Seitenwand 6 und einer zweifach abgewinkelten Seitenwand 6' gebildet.

Im Bereich der vorspringenden Winkelbereiche der zickzackförmigen Nut 3 ist jeweils ein ausgenommener Eckbereich 9, im Bereich der rückspringenden Winkelbereiche ein aufgesetzter Eckbereich 9' ausgebildet. Wie insbesondere aus Fig. 3 ersichtlich ist, ist der von der Oberseite der Lauffläche 1 aus betrachtet erste Abschnitt der Eckbereiche 9, 9' gemäß des äußeren, senkrecht verlaufenden Bereiches der Seitenwände 6' ausgebildet. Anschließend weist jeder Eckbereich 9, 9' wie insbesondere aus Fig. 1 ersichtlich ist, je zwei sowohl in Richtung zum Nutgrund, als auch zur Umfangsrichtung der Lauffläche 1 schräg verlaufende und im wesentlichen dreieckförmige Bereiche 10a, 10b, 10'a, 10'b auf. Diese sind im Falle der aufgesetzten Eckbereiche 9' und gemäß diesen einen Winkel einschließend vorspringend, im Falle der ausgenommenen Eckbereiche 9 entsprechend rückspringend angeordnet. Die Bereiche 10a 10b, 10'a und 10'b sind hiebei derart ausgebildet, daß sie in Richtung zum Nutgrund vorzugsweise bis zum zweiten, im wesentlichen senkrecht verlaufenden Abschnitt der Seitenwand 6' spitz zusammenlaufen. Dadurch ist eine gleichmäßige Profilierung der Nutseitenwände bis zum Nutgrund gewährleistet, wodurch besonders günstige Ergebnisse hinsichtlich des Traktionsverhaltens und des Abriebes über die gesamte Laufzeit des Reifens erzielbar sind. Eine ungleichförmige Abnutzung wäre, wie an sich bekannt, am stärksten in den in die Nuten hineinragenden Rippenwinkeln gegeben.

Wie schon eingangs erwähnt, bewirkt darüber hinaus die erfindungsgemäße Gestaltung der Seitenwände 6, 6', daß ein optimaler Steinauswurf gewährleistet ist, wobei gleichzeitig die Positivfahrfläche der Lauffläche 1 möglichst groß gehalten werden kann.

Für einen gleichmäßigen Abrieb über die gesamte Laufflächenbreite ist es von Vorteil, wenn die drei mittleren Nuten 3 im wesentlichen gleich breit ausgeführt sind und die Breite der beiden äußeren Nuten 2 etwa ein Viertel der Breite der mittleren Nuten 3 beträgt. In diesem Zusammenhang wirkt es sich auch vorteilhaft aus, wenn die Breite der Schulterbänder, jeweils von der äußersten der mittleren Nuten 3 aus gemessen, etwa ein Viertel der Breite der Lauffläche 1 beträgt.

**Patentansprüche**

1. Laufflächenprofil für einen Fahrzeugluftreifen, insbesondere einen Radialreifen für Lastkraftwagen, mit in Umfangsrichtung verlaufenden, durch zickzackförmige Nuten (3) voneinander getrennten Rippen (8), wobei sich der Querschnitt der Nuten (3) in Richtung zum Nutgrund zu verengt und in den vorspringenden Winkelbereichen der Nuten ausgenommene (9) und in den rückspringenden Winkelbereichen aufgesetzte (9') Eckbereiche ausgebildet sind, wobei in den Nutabschnitten (4, 5) außerhalb der ausgenommenen und aufgesetzten Eckbereiche (9, 9'), im Querschnitt betrachtet, die eine Nutseitenwand (6') zweifach abgewinkelt ausgebildet ist, welche Nutenseitenwand (6') von zwei im wesentlichen senkrecht zur Lauffläche verlaufenden, durch eine schräg verlaufende Flanke (7) verbundenen Abschnitten gebildet ist, dadurch gekennzeichnet, daß die zweifach abgewinkelte Nutenseitenwand (6') im wesentlichen über die gesamte Länge des Nutabschnittes (4, 5) in konstanter Tiefe abgewinkelt ist und die dieser gegenüberliegende Nutseitenwand (6) im wesentlichen senkrecht zur Lauffläche verlaufend ausgebildet ist, wobei in den in Umfangsrichtung der Lauffläche jeweils aufeinanderfolgenden Nutabschnitten (4,

5) der jeweils eine Rippe (8) begrenzende Nutrand alternierend von der im wesentlichen senkrechten (6) und der zweifach abgewinkelten (6') Nutenseitenwand gebildet ist.

2. Laufflächenprofil nach Anspruch 1, dadurch gekennzeichnet, daß der Winkel (α), den die schräg verlaufende Flanke (7) der zweifach abgewinkelten Seitenwand (6') mit einer Senkrechten auf die Lauffläche einschließt, 20 bis 60°, vorzugsweise 40°, beträgt.

3. Laufflächenprofil nach Anspruch 1 oder 2, dadurch gekennzeichnet, daß, von der Oberseite der Lauffläche (1) aus betrachtet, die aufgesetzten und die ausgenommenen Eckbereiche (9, 9') je einen ersten gemäß des ersten Abschnittes der zweifach abgewinkelten Seitenwand (6'), vorzugsweise im wesentlichen senkrecht zur Lauffläche verlaufenden, Abschnitt aufweisen.

4. Laufflächenprofil nach einem der Ansprüche 1 bis 3, dadurch gekennzeichnet, daß jeder aufgesetzte und jeder ausgenommene Eckbereich (9, 9') an seinen ersten Abschnitt anschließend zwei sowohl in Richtung zum Nutgrund, als auch zur Umfangsrichtung der Lauffläche schräg verlaufende Bereiche (10a, 10b, 10a', 10b') aufweist, welche in Draufsicht im wesentlichen dreieckförmig gestaltet sind und miteinander einen Winkel einschließend in Richtung zum Nutgrund spitz zusammenlaufen.

5. Laufflächenprofil nach einem der Ansprüche 1 bis 4, dadurch gekennzeichnet, daß schulterseitig an der Lauffläche (1) weitere Nuten (2) vorgesehen sind, die schmäler sind, als die im Laufflächenmittelbereich vorgesehen Nuten (3) und vorzugsweise eine Breite aufweisen, die etwa ein Viertel der Breite der im Laufflächenmittelbereich angeordneten Nuten (3) beträgt.

6. Laufflächenprofil nach einem der Ansprüche 1 bis 5, dadurch gekennzeichnet, daß die Schulterbänder, jeweils von der äußersten der im Laufflächenmittelbereich angeordneten Nuten (3) aus gemessen, eine Breite aufweisen, die etwa ein Viertel der Breite der Lauffläche (1) beträgt.

**Claims**

1. A tread profile for a vehicle pneumatic tyre, especially a radial-ply tyre for heavy-goods vehicles, with ribs (8) extending circumferentially and separated from one another by means of zigzag-shaped grooves (3), the cross-section of the grooves (3) narrowing in the direction of the groove bottom, and recessed corner regions (9) being made in the projecting angular regions of the grooves and attached corner regions (9') being made in the set-back angular regions, and in the groove portions (4, 5) outside the recessed and attached corner regions (9, 9'), as seen in cross-section, one groove side wall (6') being angled twice, this groove side wall (6') being formed by two portions extending essentially perpendicularly relative to the tread and connected by means of an oblique flank (7), characterised in that the doubly angled groove side wall (6') is angled at a constant depth essentially over the entire length of the groove portion (4, 5), and the groove side wall (6) located opposite this is designed to extend essentially perpendicularly relative to the tread, where in the groove portions (4, 5) succeeding one another in the circumferential direction of the tread, the respective groove edge limiting a rib (8) is formed alternately by the essentially vertical groove side wall (6) and the doubly angled groove side wall (6').

2. A tread profile according to Claim 1, characterised in that the angle (α) which the oblique flank (7) of the doubly angled side wall (6') forms with a perpendicular to the tread is 20 to 60°, preferably 40°.

3. A tread profile according to Claim 1 or 2, characterised in that, as seen from the top of the tread (1), the attached and the recessed corner regions (9, 9') each have a portion extending in conformity with the first portion of the doubly angled side wall (6'), preferably essentially perpendicularly relative to the tread.

4. A tread profile according to one of Claims 1 to 3, characterised in that each attached and each recessed corner region (9, 9') has, adjoining its first portion two regions (10a, 10b, 10a', 10b') which extend both in the direction of the groove bottom and obliquely relative to the circumferential direction of the tread and which are essentially triangular, as seen in plan view, and converge to a point in the direction of the groove bottom, forming an angle with one another.

5. A tread profile according to one of Claims 1 to 4, characterised in that further grooves (2) are provided on the tread (1) on the shoulder side, which are narrower than the grooves (3) provided in the middle region of the tread and preferably have a width which amounts to approximately one quarter of the width of the grooves (3) arranged in the middle region of the tread.

6. A tread profile according to one of Claims 1 to 5, characterised in that the shoulder bands, each measured from the outermost groove of the grooves (3) arranged in the middle region of the tread, have a width amounting to approximately one quarter of the width of the tread (1).

**Revendications**

1. Profil de bande de roulement pour un bandage pneumatique de véhicules, en particulier un pneumatique radial pour poids lourds, présentant des sculptures (8) qui s'étendent dans le sens circonférentiel et sont séparées les unes des autres par des rainures (3) configurées en zigzag, la section de ces rainures (3) se rétrécissant en direction de leur fond, des coins évidés (9) et des coins protubérants (9') étant respectivement ménagés dans les régions angulaires en saillie et dans les régions angulaires en retrait desdites rainures et, dans les tronçons (4, 5) de ces rainures situés à l'extérieur des coins évidés et protubérants (9, 9'), l'une (6') des parois latérales desdites rainures étant réalisée à double coude observée en coupe transversale, cette paroi latérale (6') des rainures étant formée par deux tronçons qui s'étendent pour l'essentiel verticalement par rapport à la bande de roulement, et sont reliés par l'intermédiaire d'un flanc incliné (7), caractérisé par le fait que la paroi latérale (6') des rainures, munie d'un double coude, est coudée pour l'essentiel avec une profondeur constante sur toute la longueur du tronçon (4, 5) des rainures, et la paroi latérale (6) des rainures, qui est opposée à la paroi latérale précitée, est réalisée s'étendant pour l'essentiel perpendiculairement à la bande de roulement, profil dans lequel, dans les tronçons (4, 5) des rainures qui se succèdent respectivement dans le sens circonférentiel de la bande de roulement, le bord des rainures, délimitant à chaque fois une sculpture (8), est alternativement formé par la paroi latérale (6) des rainures sensiblement verticale et par la paroi latérale (6') à double coude.

2. Profil de bande de roulement selon la revendication 1, caractérisé par le fait que l'angle (α), formé par le flanc incliné (7) de la paroi latérale (6') à double coude avec une ligne perpendiculaire à la bande de roulement, mesure de 20 à 60°, de préférence 40°.

3. Profil de bande de roulement selon la revendication 1 ou 2, caractérisé par le fait que, en considérant à partir de la face supérieure de la bande de roulement (1), les coins protubérants et les coins évidés (9, 9') présentent, à chaque fois, un premier tronçon s'étendant conformément au premier tronçon de la paroi latérale (6') à double coude, de préférence pour l'essentiel perpendiculairement à la bande de roulement.

4. Profil de bande de roulement selon l'une des revendications 1 à 3, caractérisé par le fait que chaque coin protubérant et chaque coin évidé (9, 9') présentent, dans la continuité de leur premier tronçon, deux zones (10a, 10b, 10a', 10b') qui s'étendent à l'oblique tant en direction du fond de la rainure que par rapport au sens circonférentiel de la bande de roulement, qui sont conçues pour l'essentiel de forme triangulaire observées en plan, et qui convergent en pointe en direction du fond de la rainure en formant entre elles un angle.

5. Profil de bande de roulement selon l'une des revendications 1 à 4, caractérisé par le fait que d'autres rainures (2), prévues sur la bande de roulement (1) côté épaulement, sont plus étroites que les rainures (3) prévues dans la région centrale de cette bande de roulement et possèdent, de préférence, une largeur qui représente environ un quart de la largeur desdites rainures (3) situées dans la région centrale de la bande de roulement.

6: Profil de bande de roulement selon l'une des revendications 1 à 5, caractérisé par le fait que les bandeaux d'épaulement, respectivement mesurés à partir de la plus externe parmi les rainures (3) situées dans la région centrale de la bande de roulement, possèdent une largeur qui représente environ un quart de la largeur de cette bande de roulement (1).

Fig 1

Fig. 2

Fig. 3